# EUROPÄISCHE PATENTSCHRIFT

(11) **EP 1 937 500 B1**
(45) Veröffentlichungstag und Bekanntmachung des Hinweises auf die Patenterteilung: **07.04.2010**
(21) Anmeldenummer: 06805978.1
(22) Anmeldetag: 02.10.2006
(51) Int. Cl.: B60H 3/00

(54) **REGELVORRICHTUNG FÜR EIN KRAFTFAHRZEUG UND VERFAHREN ZUR REGELUNG**
CONTROL DEVICE FOR A MOTOR VEHICLE AND CONTROL METHOD
DISPOSITIF DE REGLAGE POUR UN VEHICULE AUTOMOBILE ET PROCEDE DE REGLAGE

(30) Priorität: 11.10.2005 DE 102005048910
(43) Veröffentlichungstag der Anmeldung: 02.07.2008
(73) Patentinhaber: Behr GmbH & Co. KG, 70469 Stuttgart (DE)
(72) Erfinder: DITTRICH, André, 70372 Stuttgart (DE); MÜLLER, Frank, 75397 Simmozheim (DE)
(86) Internationale Anmeldenummer: PCT/EP2006/009525
(87) Internationale Veröffentlichungsnummer: WO 2007/042167

(56) Entgegenhaltungen:
- DE-A1- 10 259 973
- DE-A1- 19 607 637
- DE-A1- 19 850 914
- FR-A1- 2 753 657

## Beschreibung

Die Erfindung betrifft eine Regelvorrichtung für ein Kraftfahrzeug gemäß dem Oberbegriff des Anspruches 1.

Bei Kraftfahrzeug-Klimaanlagen, insbesondere bei der Verwendung von R744 (CO₂) als Kältemittel, kann es in Folge undichter Kältemittel-Leitungen, die konstruktionsbedingt teilweise auch im Fahrzeuginnenraum verlaufen, insbesondere aber auch im Bereich des vom Kältemittel durchströmten Verdampfers, zu einer Leckage des Kältemittels kommen. Dies ist insbesondere dann unerwünscht, wenn die Leitungen im Fahrzeuginnenraum angeordnet sind oder mit dem Fahrzeuginnenraum in Verbindung stehen, und somit dort für die Insassen gefährlich hohe CO₂-Konzentrationen auftreten können. Eine andere CO₂-Quelle ist die Atemluft der Insassen.

Es ist Aufgabe der Erfindung, das Auftreten hoher Kältemittel- und insbesondere hoher CO₂-Konzentrationen im Fahrzeuginnenraum sicher und auf möglichst einfache Weise zu vermeiden. Diese Aufgabe wird gelöst durch eine Regelvorrichtung mit den Merkmalen des Anspruchs 1. Vorteilhafte Ausgestaltungen sind Gegenstand der Unteransprüche.

Erfindungsgemäß ist eine Regelvorrichtung für ein Kraftfahrzeug, insbesondere für eine Kraftfahrzeug-Klimaanlage mit einem für die Insassen und Umwelt in den im Leckagefall möglichweise austretenden Mengen und Konzentrationen nicht schädliches, insbesondere nicht giftiges Medium als Kältemittel, vorzugsweise R744 (CO₂), vorgesehen. Dabei ist die Regelvorrichtung derart ausgelegt, dass zeitweise eine Zwangsbe- und/oder -entlüftung vorgesehen ist, während der Luft aus dem Fahrzeuginnenraum nach außen abgeführt und Frischluft zugeführt wird. Die Implementierung einer Zwangsbe- und/oder entlüftung des Fahrzeuginnenraums in die Regelvorrichtung ermöglicht eine sehr kostengünstige Sicherstellung, dass sich kein CO₂ im Fahrzeuginnenraum in unerwünschten Konzentrationen ansammelt, in welchen die Insassen in ihrem Komfort beeinträchtigt oder gar möglicherweise gefährdet würden.

Die Regelvorrichtung ist erfindungsgemäß im Falle eines Motorstillstands und gegebenenfalls bei abgeschalteter Kraftfahrzeug-Klimaanlage aktiviert, bevorzugt wenn sich jemand im Fahrzeuginnenraum befindet.

Erfindungsgemäß ist mindestens ein Sensor vorgesehen, der in Verbindung mit der Regelvorrichtung steht und in Abhängigkeit von dessen bzw. deren Messwerten die Zwangsbe- und/oder entlüftung geregelt wird. Beim Sensor kann es sich um einen Sensor zur Ermittlung des Kältemittel- und/oder CO₂-Gehalts im Fahrzeuginnenraum handeln. Ferner kann es sich um einen Drucksensor handeln, der den Druck des Kältemittels im Kältemittelkreislauf überwacht und ab Unterschreiten eines Grenzwertes die Zwangsbe- und/oder -entlüftung auslöst. Der Sensor kann auch Teil eines Fahrzeuginnenraum-Überwachungssystems sein, welches die Anwesenheit (und gegebenenfalls die Anzahl) von Personen im Fahrzeug erkennen kann, und welches in Verbindung mit der Regelvorrichtung bei Anwesenheit von Personen im Fahrzeug die zeitweise Zwangsbe- und/oder entlüftung regelt. Natürlich sind auch beliebige Kombinationen verschiedener Sensoren möglich. So kann auch eine Aktivierung durch das Aufschließen des Kraftfahrzeugs erfolgen. Sinnvoll ist es, wenn dabei auf Sensoren zurückgegriffen wird, die bereits aufgrund anderer Applikationen im Kraftfahrzeug eingebaut sind. Z.B. werden Sitzbelegungssensoren verwendet, um zu verhindern, dass ein Airbag unnötigerweise auslöst. Diese Sensoreninformation kann jedoch auch im Rahmen der vorliegenden Erfindung sinnvoll genutzt werden. Unter dem Begriff "Regelung" ist in diesem Zusammenhang sowohl an eine Aktivierung, als auch an die Einstellung beispielsweise unterschiedlicher Belüftungsstärken zu denken.

Die Zwangsbe- und/oder Entlüftung ist vorzugsweise über einen Timer getaktet. Die Taktzeiten und/oder die jeweilige Dauer der Zwangsbe- und/oderentlüftung können von weiteren ermittelten Parametern abhängig sein. Insbesondere bevorzugt kann die Zahl der Insassen die Taktzeiten verringern und/oder die Dauer der Zwangsbe- und/oder -entlüftung verlängern. Entsprechendes gilt auch bei sinkenden Kältemitteldrücken, wobei in diesem Fall üblicherweise die jeweilige Kältemitteltemperatur und die Druckdifferenzen in Abhängigkeit der verstrichenen Zeit zwischen zwei Messungen relevant sind. Ebenfalls maßgebend kann auch der Beladungszustand der Fahrzeugbatterie sein, um eine vollständige Entladung der Batterie zu vermeiden. Die Zwangsbe- und/oder -entlüftung kann zudem auch zur Erhöhung des Komforts bei Sonneneinstrahlung und damit verbundener zu hoher Temperatur des Fahrzeuginnenraums dienen, da durch die regelmäßige Zwangsbe- und/oder -entlüftung die Temperatur im Fahrzeuginnenraum abgesenkt werden kann. Gegebenenfalls kann auch die Temperatur im Fahrzeuginnenraum einen Einfluss auf die Regelvorrichtung nehmen.

Im Falle eines Motorstillstands bei abgeschalteter Kraftfahrzeug-Klimaanlage werden erfindungsgemäß die Luftwege von dem Bereich der Klimaanlage, in welchem der Verdampfer angeordnet ist, zum Fahrzeuginnenraum unterbrochen. Durch die Unterbrechung der Luftwege zwischen dem Bereich der Klimaanlage, in welchem der Verdampfer angeordnet ist, und dem Fahrzeuginnenraum kann ein Eindringen des Kältemittels in den Fahrzeuginnenraum und somit eine mögliche Gefährdung der Insassen sicher und auf einfache Weise vermieden werden. Da das Kältemittel, zumindest im Falle von CO₂, in den gegebenenfalls austretenden Mengen nicht schädlich für die Umwelt ist, kann es direkt nach außen an die Umgebung abgeführt werden, d.h. es sind keine weiteren Maßnahmen, wie beispielsweise Zwischenspeicher o.ä., erforderlich.

Vorzugsweise ist mindestens ein Kondensatablauf vorgesehen, durch welchen bei Normalbetrieb das sich im Verdampfer sammelnde Kondensat nach außen abgeleitet werden kann und der zumindest im Falle eines Motorstillstands bei stehender Kraftfahrzeug-Klimaanlage einen offenen Verbindungskanal nach außen bildet. Da über den Kondensatablauf üblicherweise allein durch die Wirkung der Schwerkraft das Kondensat nach außen abgeführt wird und dieser somit im unteren Bereich und mit einem ausreichenden Gefälle versehen angeordnet ist, kann der Kondensatablauf ohne spezielle Maßnahmen auch für die Abführung des sich sammelnden gasförmigen Kältemittels verwendet werden, da dieses üblicherweise schwerer als Luft (bzw. die wesentlichen Luftbestandteile, wie insbesondereO₂ und N₂) ist, und sich deshalb im unteren Bereich sammelt und somit auch ohne spezielle Maßnahmen durch den Kondensatablauf nach außen strömt.

Die Regelvorrichtung sieht vorzugsweise vor, dass im Falle eines Motorstillstands und gegebenenfalls bei abgeschalteter Kraftfahrzeug-Klimaanlage mindestens eine Frischluft-Klappe geöffnet ist. Dies ist im Falle einer direkten Koppelung der Frischluft- und Umluft-Klappe automatisch der Fall, im Falle voneinander (bedingt) unabhängiger Öffnungszustände ist jedoch sicherzustellen, dass die Umluft-Klappe vollständig geschlossen ist, während die Frischluft-Klappe möglichst weit geöffnet ist, um einen möglichst kleinen Strömungswiderstand für das gasförmige Kältemittel zu bilden. Ein Ausströmen durch die Frischluft-Klappe erfolgt insbesondere im Falle größerer Leckagemengen, die nicht ausschließlich über den gegebenenfalls auch vorhandenen Kondensatablauf abgeführt werden können. Vorzugsweise ist je Luftkanal, der zwischen dem Bereich der Klimaanlage, in welchem der Verdampfer angeordnet ist, und dem Fahrzeuginnenraum vorgesehen ist, mindestens eine Klappe geschlossen, die in dem oder an einem Ende des Luftkanals angeordnet ist. Hierbei handelt es sich vorzugsweise um Umluft-, Defrost-, Belüftungs- und/oder Fußraum-Klappen, welche jeweils den entsprechenden Luftkanal verschließen, so dass keine zusätzlichen baulichen Maßnahmen, die mit einer Umkonstruktion der Klimaanlage verbunden wären, getroffen werden müssen. Vielmehr reicht eine einfache Implementierung der Schließfunktion für den Falle eines Motorstillstands bei stehender Kraftfahrzeug-Klimaanlage in die vorhandene Regelungssoftware.

Ferner kann zur Überwachung des Drucks und somit des Füllstands des Kältemittelkreislaufs (und somit einer möglichen Leckage) ein Drucksensor im Kältemittelkreislauf vorgesehen sein, wobei der Drucksensor mit der Reglung verbunden ist und die Regelung des Schließens der Klappen ab dem Unterschreiten eines vorgegebenen Grenzwertes und/oder bei Überschreiten eines abfallenden Druckgradienten (ggf. unter Mitberücksichtigung der Temperatur) aktiviert wird. Zuvor ist von keiner Leckage auszugehen, so dass auf die vorgenannten Maßnahmen verzichtet werden kann.

Um im Falle eines Motorstarts oder vorab im Falle eines Öffnens, also bei einer Aktivierung der Kraftfahrzeug-Regelung, eines Fahrzeugs, das über längere Zeit ohne Betätigung der Klimaanlage gestanden ist, schnell das sich gegebenenfalls in der Klimaanlage gesammelte Kältemittel abzuführen, kann - auch in Verbindung mit der während des Stillstands vorgesehenen Zwangsbe- und/oder -entlüftung - das Gebläse der Kraftfahrzeug-Klimaanlage zuerst kurzfristig in umgekehrter Richtung betrieben werden, oder ein anderes, aus dem Innenraum der Kraftfahrzeug-Klimaanlage absaugendes Gebläse vorgesehen sein, das in diesem Fall betrieben wird, wobei die Klappenstellung der Frischluftklappe zumindest so lange beibehalten werden, bis zumindest ein Teil der in der Klimaanlage enthaltenen Luft nach außen abgeführt wurde (Möglichkeit einer Zwangsentlüftung). Danach kann die Klimaanlage auf übliche Weise betrieben werden. Der mit dem Absaugen verbundene Luftaustausch kann durch das Öffnen der Klappen zum Fahrzeuginnenraum unterstützt werden.

Die Zwangsbelüftung erfolgt üblicherweise mit Hilfe des normalen Gebläses der Klimaanlage und ist automatisch mit einer Zwangsentlüftung verbunden, da der Druck im Fahrzeuginnenraum ansteigt und die Luft nach außen durch sämtliche vorhandene Öffnungen entweicht.

Alternativ kann auch über das in umgekehrter Richtung laufende Gebläse eine Zwangsentlüftung vorgesehen sein, so dass der Frischluftkanal in umgekehrter Richtung durchströmt wird und in Folge des Unterdrucks im Fahrzeuginnenraum Luft durch alle vorhandenen Öffnungen eindringt. Es kann auch mindestens ein spezielles Entlüftungsgebläse vorgesehen sein.

Vorteilhaft ist, dass die Zwangsbe- und/oder -entlüftung geregelt wird, sobald das Kraftfahrzeug aufgeschlossen und/oder ein Insasse im Fahrzeuginnenraum ermittelt wird.

Vorteilhaft ist, dass die Zwangsbe- und/oder entlüftung zyklisch erfolgt.

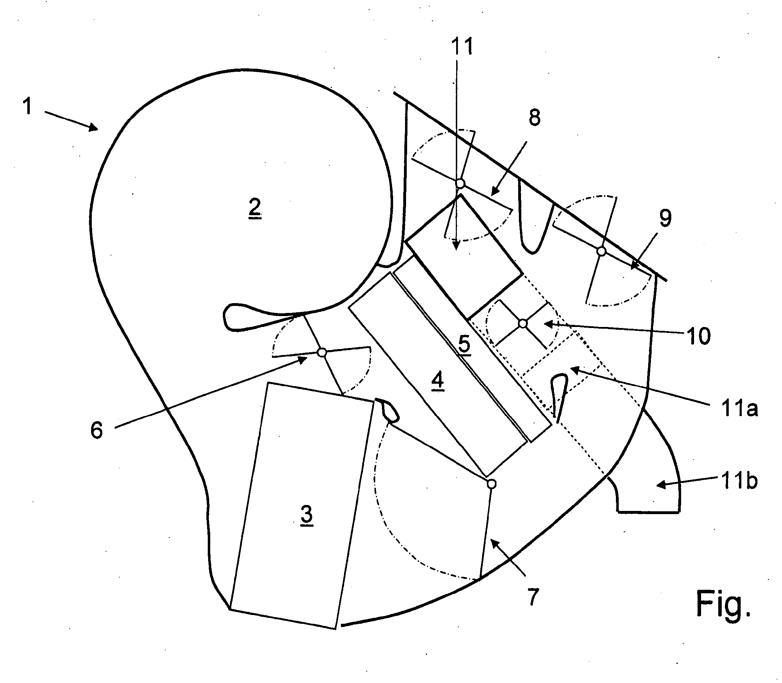

Im Folgenden wird eine erfindungsgemäße Regelvorrichtung einer Kraftfahrzeug-Klimaanlage anhand eines Ausführungsbeispiels unter Bezugnahme auf die Zeichnung im Einzelnen erläutert. Die einzige Figur der Zeichnung zeigt eine schematische Darstellung einer Kraftfahrzeug-Klimaanlage, die im Folgenden in ihrer Gesamtheit durch das Bezugszeichen 1 bezeichnet ist.

Ein Kraftfahrzeug weist - vorliegend integriert in die herkömmliche Regelvorrichtung - eine nicht näher dargestellten Regelung für die erfindungsgemäße Belüftung des Fahrzeuginnenraums auf. Die Regelvorrichtung regelt gemäß dem vorliegenden Ausführungsbeispiel neben der Art (Frischluft und/oder Umluft) und Menge (Gebläseleistung) der dem Innenraum zugeführten Luft auch die Luftverteilung sowie die Temperierung der Luft durch die Klimaanlage 1.

Die Klimaanlage 1 weist ein Gebläse 2, einen Verdampfer 3 und einen Heizkörper 4 mit PTC-Zuheizer 5 auf. Hierbei ist parallel zum Verdampfer 3 eine Bypass-Klappe 6 vorgesehen, welche einen benachbart zum Verdampfer 3 angeordneten Bypass freigibt oder verschließt, der ein Vorbeiströmen der vom Gebläse 2 kommenden Luft am Verdampfer 3 ermöglicht. Hinter dem Verdampfer 3 ist eine weitere Klappe 7 vorgesehen, welche die vom Verdampfer 3 kommende Luft entweder durch den Heizkörper 4 mit PTC-Zuheizer 5 oder an ihm vorbei leitet. Hierbei sind Zwischenstellungen der Klappe 7 möglich. Nach den Wärmetauschern 3 und 4 ist eine Defrost-Klappe 8 zum Entfernen eines Beschlags an der Windschutzscheibe, welche einen Defrost-Luftkanal bei Bedarf öffnet oder verschließt, und eine Belüftungs-Klappe 9 zum Belüften des Fahrzeuginnenraums z.B. über Mittel- und Seitendüsen, welche einen Belüftungs-Luftkanal bei Bedarf öffnet oder verschließt, vorgesehen.

Ferner ist direkt nach dem Heizkörper 4 eine Fußraum-Klappe 10 angeordnet, welche einen Luftkanal 11 zum Fußraum nach Bedarf freigibt oder verschließt, wobei auch Zwischenstellungen der Fußraum-Klappe 10 möglich sind. Der Luftkanal 11 verzweigt sich gemäß dem vorliegenden Ausführungsbeispiel unmittelbar nach der Klappe 10 in einen Luftkanal 11a, welcher der seitlichen Luftzufuhr zum Fußraum dient, und einen Luftkanal 11 b, welcher der hinteren Luftzufuhr zum Fußraum dient.

Die Luft wird im Normalbetrieb vom Gebläse 2 - je nach Stellung der Umluft- und Frischluft-Klappen (nicht dargestellt) - aus der Umgebung (Frischluft) und/oder aus dem Fahrzeuginnenraum angesaugt und zur Temperierung durch die zuvor beschriebene Kraftfahrzeug-Klimaanlage 1 und über die verschiedenen Luftkanäle in Abhängigkeit der entsprechenden Klappenstellungen der Klappen 8, 9 und 10 in die entsprechenden Bereiche des Fahrzeuginnenraums geleitet.

Da sich üblicherweise ein Teil der in der Luft enthaltenen Luftfeuchtigkeit als Kondensat im Verdampfer 3 niederschlägt, ist ein Kondensatablauf (nicht dargestellt) vorgesehen, durch welchen das Kondensat nach außen abgegeben werden kann. Vorliegend ist der Kondensatablauf derart ausgebildet, dass das Kondensat von selbst abläuft, wobei er stets offen ist.

Bei der Klimaanlage 1 handelt es sich vorliegend um eine herkömmliche Klimaanlage, wobei als Kältemittel in einem Kältekreislauf, der den Verdampfer 3 beinhaltet, vorliegend R744 (CO₂) verwendet wird. Da es bei derartigen Kältekreisläufen zu einer Kältemittelleckage verbunden mit einer Ansammlung von ausgetretenem Kältemittel im Fahrzeuginnenraum kommen kann, welche im Extremfall für die Insassen gefährlich sein kann, in jedem Fall aber unerwünscht ist, ist die Regelung der Klimaanlage 1 vorliegend derart ausgelegt, dass zeitweise eine Zwangsbe- und/oder Entlüftung vorgesehen ist, während der Luft aus dem Fahrzeuginnenraum nach außen abgeführt und Frischluft zugeführt wird. Hierfür wird - getaktet über einen Timer - der Fahrzeuginnenraum zyklisch belüftet, sofern der Motor und/oder die Klimaanlage läuft. Hierfür wird - sofern nicht bereits die Frischluft-Klappe vorliegend zumindest 50% geöffnet ist oder durch eine andere übergeordnete Einstellung von Hand, wie z.B. Umluftschaltung für Tunnelfahrt, fest vorgegeben - automatisch die Frischluft-Klappe vollständig geöffnet und die Umluft-Klappe vollständig geschlossen, so dass von außen Frischluft dem Fahrzeuginnenraum zugeführt wird (Zwangsbelüftung).

Die vorstehend beschriebene Zwangsbelüftung ist - sofern Insassen durch ein Fahrzeuginnenraum-Überwachungssystem, vorliegend einer Sitzplatzerkennung, ermittelt werden - auch während eines Motorstillstands und bei stehender Kraftfahrzeug-Klimaanlage 1 vorgesehen, wofür im Bedarfsfall die Klappenstellung jeweils entsprechend geändert und zyklisch kurzzeitig das Gebläse 2 aktiviert wird.

Gemäß einer Variante des Ausführungsbeispiels, ist die Regelung der Klimaanlage 1 zudem derart ausgelegt, dass bei einem Motorstillstand bei stehender Klimaanlage 1 automatisch sämtliche Verbindungswege, d.h. Luftkanäle, zwischen dem Bereich, in welchem der Verdampfer 3 der Klimaanlage 1 angeordnet ist, und dem Fahrzeuginnenraum durch die funktionsbedingt bereits vorhandenen, zumindest im Wesentlichen gasdichten Klappen verschlossen werden. Dies betrifft gemäß dem vorliegenden Ausführungsbeispiel die in der Figur dargestellten Klappen 8, 9 und 10 und außerdem noch die nicht in der Zeichnung dargestellte Umluftklappe, die in normaler Luftströmungsrichtung vor dem Gebläse 2 angeordnet ist.

Die Frischluftklappe ist - auf Grund der geschlossenen Umluftklappe, mit welcher dieselbe gekoppelt ist - gemäß dem vorliegenden Ausführungsbeispiel geöffnet, so dass das gegebenenfalls als Leckage aus dem Verdampfer 3 ausgetretene Kältemittel entgegen der normalen Luftströmungsrichtung durch das Gebläse 2 und die Frischluftklappe strömen und an die Umgebung abgegeben werden kann. Im Normalfall, d.h. bei relativ geringen Leckageraten wird das gegebenenfalls ausgetretene gasförmige Kältemittel über den offenen Kondensatablauf des Verdampfers, welcher eine weitere direkte Verbindung mit der Umgebung darstellt, nach außen gelangen, da sich das CO₂, das etwas schwerer als Sauerstoff ist, es sich im unteren Bereich sammelt und dadurch durch den normalerweise vom flüssigen Kondensat durchströmten Kondensatablauf nach außen gelangt. Nur bei größeren Leckageraten gelangt das gasförmige Kältemittel über die Frischluftklappe nach außen. Das austretende CO₂ belastet - auf Grund des kontinuierlichen Austritts in relativ geringen Mengen - die Umwelt nicht.

Diese Betätigung der Aktuatoren der entsprechenden Klappen kann auf besonders einfach zu regelnde Weise dadurch ausgelöst werden, dass das Kraftfahrzeug von außen abgeschlossen wird.

Die Variante des Ausführungsbeispiels stellt sicher, dass auch bei Fahrtantritt keine zu hohe CO₂-Konzentration im Fahrzeuginnenraum vorliegt.

Werden jedoch Insassen durch das Überwachungssystem ermittelt, so erfolgt die gemäß dem ersten Ausführungsbeispiel vorgesehene zyklisch Zwangsbelüftung des Fahrzeuginnenraums, mit entsprechender zumindest zeitweiser Änderung der Klappenstellungen.

Gemäß einer weiteren Variante erfolgt die Zwangsbe- und entlüftung ab dem Unterschreiten eines vorgegebenen Drucks und/oder bei Überschreiten eines abfallenden Druckgradienten (ggf. unter Mitberücksichtigung der Temperatur) im Kältemittelkreislauf, welcher mit Hilfe eines Sensors in regelmäßigen Zeitabständen oder bei jedem Motorstart überwacht wird, auch während eines längeren Motorstillstands in regelmäßigen Zeitintervallen.

## Patentansprüche

1. Regelvorrichtung für ein Kraftfahrzeug, insbesondere für ein Kraftfahrzeug mit einer Klimaanlage (1), welche insbesondere CO₂ als Kältemittel enthält, wobei die Regelvorrichtung derart ausgelegt ist, dass zeitweise eine Zwangsbe- und/oder -entlüftung vorgesehen ist, während der Luft aus dem Fahrzeuginnenraum nach außen abgeführt und Frischluft zugeführt wird, wobei mindestens ein Sensor vorgesehen ist, der in Verbindung mit der Regelvorrichtung steht und in Abhängigkeit von dessen beziehungsweise deren Messwerten die Zwangsbe- und/oder entlüftung geregelt wird, wobei im Falle eines Motorstillstands und gegebenenfalls bei abgeschalteter Kraftfahrzeug-Klimaanlage (1) die Regelvorrichtung aktiviert ist, **dadurch gekennzeichnet, dass** im Falle eines Motorstillstands bei abgeschalteter Kraftfahrzeug-Klimaanlage (1) die Luftwege von dem Bereich der Klimaanlage (1), in welchem der Verdampfer (3) angeordnet ist, zum Fahrzeuginnenraum unterbrochen sind.

2. Regelvorrichtung nach Anspruch 1, **dadurch gekennzeichnet, dass** der Sensor ein Sensor zur Ermittlung des Kältemittel- und/oder CO₂-Gehalts im Fahrzeuginnenraum oder ein Drucksensor zur Ermittlung des Drucks im Kältemittelkreislauf ist.

3. Regelvorrichtung nach Anspruch 1 oder 2, **dadurch gekennzeichnet, dass** der Sensor Teil eines Fahrzeuginnenraum-Überwachungssystems ist, welches die Anwesenheit von Personen im Fahrzeug erkennen kann, und welches in Verbindung mit der Regelvorrichtung bei Anwesenheit von Personen im Fahrzeug die zeitweise Zwangsbe- und/oder - entlüftung geregelt.

4. Regelvorrichtung nach einem der vorhergehenden Ansprüche, **dadurch gekennzeichnet, dass** die Zwangsbe- und/oder Entlüftung über einen Timer getaktet ist.

5. Regelvorrichtung nach einem der vorhergehenden Ansprüche, **dadurch gekennzeichnet, dass** mindestens ein Kondensatablauf vorgesehen ist, der zumindest im Falle eines. Motorstillstands bei stehender Kraftfahrzeug-Klimaanlage (1) einen offenen Verbindungskanal von der Klimaanlage (1) nach außen bildet.

6. Regelvorrichtung nach einen der vorhergehenden Ansprüche, **dadurch gekennzeichnet, dass** die Regelung derart ausgelegt ist, dass im Falle eines Motorstillstands bei stehender Kraftfahrzeug-Klimaanlage (1) mindestens eine Frischluftklappe geöffnet ist.

7. Regelvorrichtung nach einem der vorhergehenden Ansprüche, **dadurch gekennzeichnet, dass** je Luftkanal, der zwischen dem Bereich der Klimaanlage (1), in welchem der Verdampfer (3) angeordnet ist, und dem Fahrzeuginnenraum vorgesehen ist, mindestens eine Klappe (8, 9, 10), die in dem oder an einem Ende des Luftkanals angeordnet ist, im Falle eines Motorstillstands bei stehender Kraftfahrzeug-Klimaanlage (1) geschlossen ist.

8. Regelvorrichtung nach einem der vorhergehenden Ansprüche, **dadurch gekennzeichnet, dass** mindestens einer der Luftwege durch mindestens eine die Luftzufuhr und -verteilung im Normalbetrieb regelnde Umluft-Klappe, Defrost-Klappe (8), Belüftungs-Klappe (9) und/oder Fußraum-Klappe (10) im Falle eines Motorstillstands bei stehender Kraftfahrzeug-Klimaanlage (1) versperrt ist.

9. Verfahren zur Regelung einer Kraftfahrzeug-Klimaanlage, mit einer Regelvorrichtung nach einen der Ansprüche 1 bis 8, insbesondere einer Kraftfahrzeug-Klimaanlage (1) mit CO₂ als Kältemittel, **dadurch gekennzeichnet, dass** der Fahrzeuginnenraum zeitweise zwangsbe- und/oder -entlüftet wird, wobei Frischluft zugeführt und/oder Luft aus dem Fahrzeuginnenraum nach außen abgeführt wird.

10. Verfahren nach Anspruch 9, **dadurch gekennzeichnet, dass** die Zwangsbe- und/oder -entlüftung durch ein Fahrzeuginnenraum-Überwachungssystem und/oder einen Drucksensor und/oder einen CO₂-Sensor geregelt wird.

11. Verfahren nach Anspruch 9 oder 10, **dadurch gekennzeichnet, dass** die Zwangsbe- und/oder -entlüftung im Falle eines Motorstillstands und/oder bei stehender Kraftfahrzeug-Klimaanlage (1) geregelt wird.

12. Kraftfahrzeug, **gekennzeichnet durch** eine Regelvorrichtung nach einem der Ansprüche 1 bis 8.

## Claims

1. Control device for a motor vehicle, in particular a motor vehicle with an air-conditioning unit (1) containing CO₂ in particular as the refrigerant, such that the control device is designed in such manner that from time to time forced aeration and/or venting take place, during which air is expelled from the inside space of the vehicle and fresh air is drawn in, at least one sensor being provided, which is/are connected to the control device and, as a function of its or their measured values the forced aeration and/or venting are regulated so that when the engine is off and if necessary when the air-conditioning unit (1) of the motor vehicle is switched off the control device is activated, **characterised in that** if the engine is off and the air-conditioning unit (1) of the motor vehicle is also switched off, the air paths from the area of the air-conditioning unit (1) in which the evaporator (3) is located to the interior of the vehicle are blocked.

2. Control device according to Claim 1, **characterised in that** the sensor is a sensor for determining the content of refrigerant and/or CO₂ in the interior of the vehicle, or a pressure sensor for determining the pressure in the refrigerant circuit.

3. Control device according to Claims 1 or 2, **characterised in that** the sensor is part of a system for monitoring the interior of the vehicle, which can detect the presence of occupants in the vehicle and which, in combination with the control device, regulates the forced aeration and/or venting that take place from time to time when occupants are present in the vehicle.

4. Control device according to any of the preceding claims, **characterised in that** the forced aeration and/or venting is timed by a timer.

5. Control device according to any of the preceding claims, **characterised in that** at least one condensate drain is provided which, at least in the case when the engine is off and the air-conditioning unit (1) of the motor vehicle is also switched off, forms a duct that connects the air-conditioning unit (1) to the outside.

6. Control device according to any of the preceding claims, **characterised in that** the regulation mode is designed such that if the engine and the air-conditioning unit (1) of the motor vehicle are both off, at least one fresh air shutter-valve is open.

7. Control device according to any of the preceding claims, **characterised in that** in any air duct provide between the area of the air-conditioning unit (1) in which the evaporator (3) is located and the interior of the vehicle, at least one shutter-valve (8, 9, 10) arranged in or at one end of the air duct is closed if the engine and the air-conditioning unit (1) are off.

8. Control device according to any of the preceding claims, **characterised in that** when the engine and the air-conditioning unit (1) of the motor vehicle are off, at least one of the air paths is blocked by at least one of: the circulation shutter-valve, the defrost shutter-valve (8), the venting shutter-valve (9) and/or a foot-well shutter-valve (10) that regulate the air intake and distribution during normal operation.

9. Method for controlling an air-conditioning unit of a motor vehicle having a control device according to any of Claims 1 to 8, in particular a motor vehicle air-conditioning unit (1) with CO₂ as the refrigerant, **characterised in that** the interior of the vehicle is subjected to forced aeration and/or venting from time to time, such that fresh air is drawn into the interior of the vehicle and/or air is expelled therefrom to the outside.

10. Method according to Claim 9, **characterised in that** the forced aeration and/or venting is regulated by virtue of a vehicle interior monitoring system and/or a pressure sensor and/or a CO₂ sensor.

11. Method according to Claims 9 or 10, **characterised in that** the forced aeration and/or venting are regulated in the case when the engine and the air-conditioning unit (1) of the motor vehicle are off.

12. Motor vehicle, **characterised by** a control device according to any of Claims 1 to 8.

## Revendications

1. Dispositif de régulation pour un véhicule automobile, en particulier pour un véhicule automobile équipé d'un système de climatisation (1) qui comprend, en particulier, du CO₂ servant de fluide frigorigène, où le dispositif de régulation est conçu de manière telle, qu'il soit prévu, par moments, une ventilation et / ou purge d'air forcée pendant laquelle de l'air sortant de l'habitacle du véhicule est évacué vers l'extérieur et de l'air frais fourni, où il est prévu au moins un capteur qui communique avec le dispositif de régulation et, en fonction de sa ou de ses valeur(s) mesurée(s), la ventilation et / ou purge d'air forcée est régulée, où, en cas d'arrêt du moteur et, le cas échéant, lorsque le système de climatisation (1) du véhicule automobile est coupé, le dispositif de régulation est activé,
**caractérisé en ce que,** le système de climatisation (1) du véhicule automobile étant coupé en cas d'arrêt du moteur, les trajectoires d'air partant de la zone du système de climatisation (1), dans laquelle est disposé l'évaporateur (3), jusqu'à l'habitacle du véhicule, sont interrompues.

2. Dispositif de régulation selon la revendication 1,
**caractérisé en ce que** le capteur est un capteur servant à déterminer la teneur en fluide frigorigène et / ou en CO₂ dans l'habitacle du véhicule, ou bien un capteur de pression servant à déterminer la pression dans le circuit de fluide frigorigène.

3. Dispositif de régulation selon la revendication 1 ou 2,
**caractérisé en ce que** le capteur fait partie d'un système de surveillance de l'habitacle du véhicule qui peut détecter la présence de personnes dans le véhicule et qui, en association avec le dispositif de régulation, régule la ventilation et / ou purge d'air forcée se produisant par moments en cas de présence de personnes dans le véhicule.

4. Dispositif de régulation selon l'une quelconque des revendications précédentes, **caractérisé en ce que** la ventilation et / ou purge d'air forcée est cadencée par une horloge.

5. Dispositif de régulation selon l'une quelconque des revendications précédentes, **caractérisé en ce qu'**il est prévu au moins une évacuation de condensation qui, le système de climatisation (1) du véhicule automobile étant coupé en cas d'arrêt du moteur, forme au moins un conduit de communication ouvert vers l'extérieur à partir du système de climatisation (1).

6. Dispositif de régulation selon l'une quelconque des revendications précédentes, **caractérisé en ce que** la régulation est conçue de manière telle, qu'au moins un volet d'air frais soit ouvert, lorsque le système de climatisation (1) du véhicule est coupé en cas d'arrêt du moteur.

7. Dispositif de régulation selon l'une quelconque des revendications précédentes, **caractérisé en ce que,** pour chaque conduit d'air qui est disposé entre la zone du système de climatisation (1), dans laquelle l'évaporateur (3) est disposé, et l'habitacle du véhicule, il est prévu au moins un volet (8, 9, 10) qui est disposé dans l'extrémité ou à une extrémité du conduit d'air, volet qui est fermé lorsque le système de climatisation (1) du véhicule automobile est coupé en cas d'arrêt du moteur.

8. Dispositif de régulation selon l'une quelconque des revendications précédentes, **caractérisé en ce que,** le système de climatisation (1) du véhicule étant coupé en cas d'arrêt du moteur, au moins l'une des trajectoires d'air est obturée par au moins un volet d'air ambiant, un volet de dégivrage (8), un volet de ventilation (9) et / ou un volet d'espace pour les pieds (10) régulant l'alimentation et la répartition d'air au cours du fonctionnement normal.

9. Procédé de régulation d'un système de climatisation d'un véhicule automobile comprenant un dispositif de régulation selon l'une quelconque des revendications 1 à 8, en particulier d'un système de climatisation (1) d'un véhicule automobile fonctionnant avec du CO₂ comme fluide frigorigène, **caractérisé en ce que** l'habitacle du véhicule est par moments ventilé et / ou purgé de façon forcée, où de l'air frais est fourni et / ou de l'air sortant de l'habitacle du véhicule évacué vers l'extérieur.

10. Procédé selon la revendication 9, **caractérisé en ce que** la ventilation et / ou purge d'air forcée est régulée par un système de surveillance de l'habitacle du véhicule et / ou par un capteur de pression et / ou par un capteur de CO₂.

11. Procédé selon la revendication 9 ou 10, **caractérisé en ce que** la ventilation et / ou purge d'air forcée est régulée en cas d'arrêt du moteur et / ou lorsque le système de climatisation (1) du véhicule automobile est coupé.

12. Véhicule automobile **caractérisé par** un dispositif de régulation selon l'une quelconque des revendications 1 à 8.
